(19) Europäisches Patentamt
European Patent Office
Office européen des brevets

(11) **EP 3 407 537 B1**

(12) **FASCICULE DE BREVET EUROPEEN**

(45) Date de publication et mention de la délivrance du brevet:
**04.12.2019 Bulletin 2019/49**

(51) Int Cl.:
**H04L 9/32** *(2006.01)*

(21) Numéro de dépôt: **18173873.3**

(22) Date de dépôt: **23.05.2018**

(54) **PROCÉDÉ DE SIGNATURE ÉLECTRONIQUE D'UN DOCUMENT AVEC UNE CLÉ SECRÈTE PRÉDÉTERMINÉE**

VERFAHREN ZUR ELEKTRONISCHEN SIGNATUR EINES DOKUMENTS MIT EINEM VORBESTIMMTEN GEHEIMEN SCHLÜSSEL

METHOD OF ELECTRONICALLY SIGNING A DOCUMENT WITH A PREDETERMINED SECRET KEY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2017 FR 1754636**

(43) Date de publication de la demande:
**28.11.2018 Bulletin 2018/48**

(73) Titulaire: **Idemia Identity & Security France**
**92400 Courbevoie (FR)**

(72) Inventeurs:
• **SERVANT, Victor**
**92130 Issy Les Moulineaux (FR)**
• **PROUFF, Emmanuel**
**92130 Issy Les Moulineaux (FR)**
• **CHABANNE, Hervé**
**92130 Issy Les Moulineaux (FR)**

(74) Mandataire: **Regimbeau**
**87 rue de Sèze**
**69477 Lyon Cedex 06 (FR)**

(56) Documents cités:
WO-A1-2016/155565     US-A1- 2009 094 464
US-A1- 2013 024 699

## Description

DOMAINE TECHNIQUE GENERAL

La présente invention concerne le domaine de la cryptographie, et en particulier un procédé de signature de type « boite blanche ».

ETAT DE L'ART

Une fonction est considérée comme une « boîte noire » lorsqu'on ne peut pas accéder à son fonctionnement interne, i.e. qu'on peut connaître ses entrées et ses sorties mais pas ses paramètres secrets ou ses états intermédiaire.

Les algorithmes cryptographiques (par exemple pour du chiffrement ou de la signature) sont ainsi classiquement supposés des boites noires lorsqu'on évalue leur fiabilité (résistance aux attaques).

L'hypothèse de boite noire impose une contrainte forte sur le stockage et la manipulation de ces paramètres. Cependant des outils ont été récemment publiés pour permettre l'automatisation d'attaques sur implémentation matérielle, attaques dites par canaux auxiliaires ou par fautes.

Aujourd'hui, pour de nombreux cas d'usages incluant le paiement sur mobile, il est nécessaire de déployer des algorithmes cryptographiques en faisant le moins d'hypothèses possibles sur la sécurité du matériel cible. Le stockage et la manipulation sécurisés des paramètres secrets doivent alors être assurés au niveau applicatif.

La cryptographie dite boite blanche vise à répondre à ce défi en proposant des implémentations des algorithmes cryptographiques qui sont sensés rendre l'extraction des secrets impossible, même en cas d'attaque permettant à l'attaquant un accès complet à l'implémentation logicielle de l'algorithme. Plus précisément, une fonction est considérée comme une « boîte blanche » lorsque ses mécanismes sont visibles et permettent d'en comprendre le fonctionnement. En d'autres termes, on fait directement l'hypothèse que l'attaquant a accès à tout ce qu'il souhaite (le binaire est complètement visible et modifiable par l'attaquant et celui-ci a le plein contrôle de la plateforme d'exécution). Par conséquent, l'implémentation elle-même est la seule ligne de défense. On parle alors « d'implémentation blanchie » d'un calcul élémentaire de l'algorithme lorsqu'on arrive à représenter ce calcul sous une forme sécurisée évitant d'avoir les clés utilisées en clair, par exemple en représentant le calcul par une table stockée en mémoire.

Il a par exemple été proposé dans la demande US2016/328543 une méthode visant à cacher les entrées et les sorties d'une fonction d'exponentiation modulaire, ce qui permet d'améliorer la sécurité d'algorithmes cryptographiques tels que RSA (« Rivest, Shamir, Adleman »).

Toutefois, il a été montré que cette méthode n'était pas suffisante pour assurer une protection satisfaisante de l'algorithme de signature DSA (« Digital Signature Algorithm »).

Le calcul d'une signature DSA présuppose qu'une clef publique ($p$, $q$, $g$, $y$) et une clef privée $x$ ont été associées à l'utilisateur. Le procédé de génération de ces clefs se compose des différentes étapes suivantes :

- Choisir un nombre premier $p$ de longueur $L$ telle que $512 \leq L \leq 1024$, et L est divisible par 64
- Choisir un nombre premier $q$ de 160 bits, de telle façon que $p - 1 = qc$, avec $c$ un entier
- Choisir $h$, avec $1 < h < p - 1$ de manière à construire $g$ tel que $g = h^c \bmod p > 1$
- Générer aléatoirement un $x$, avec $0 < x < q$
- Calculer $y = g^x \bmod p$

La signature DSA d'un message $m$ commence par un calcul de haché $H(m)$ (à l'aide d'une fonction de hachage standard comme le SHA256) puis se poursuit par le calcul de deux valeurs $s_1$ et $s_2$ telles que :

-
$$s_1 = (g^k \bmod p) \bmod q$$

-
$$s_2 = (H(m) + s_1 x)k^{-1} \bmod q$$

où $k$ est une donnée appelée nonce (i.e. un nombre arbitraire, c'est-à-dire un aléa, à usage unique, de l'anglais « number used once »), qui doit être tirée aléatoirement pour chaque nouvelle signature.

La signature est ($s_1$, $s_2$).

Comme expliqué, on peut obtenir des implémentations blanchies de chacune des fonctions de calcul des états internes $s_1$ et $s_2$ en cachant l'exponentiation modulaire.

Toutefois, la même application de l'implémentation blanchie de $s_2$ à deux données z et z' différentes (par exemple les condensats de deux messages différents) tout en forçant la réutilisation d'un même nonce $k$ (ce qui est normalement impossible sauf dans une attaque boite blanche ou l'on aurait accès au matériel) permet par calcul de $s_2(z) - s_2(z')$ de remonter à x. On appelle cela une « restart attack ».

Le document de publication de demande de brevet US 2013/0024699 A1 par Muir et al. expose un procédé de signature résistant aux attaques en boîte blanche.

Le document de publication de demande de brevet US 2009/0094464 A1 par Futa et al. expose un procédé de signature cachant les valeurs et les opérations relatives aux groupes par rapport auxquels ladite signature est générée.

Le document de publication de demande de brevet WO 2016/155565 A1 par Ding expose un procédé de génération de signature multivariée réduisant le degré du polynôme central.

Il serait par conséquent souhaitable de disposer d'une nouvelle solution de signature « boite blanche » utilisant le mécanisme standard tel que DSA qui soit complètement résistante à toutes attaques connues.

PRESENTATION DE L'INVENTION

Selon un premier aspect, la présente invention concerne un procédé de signature électronique d'un document avec une clé secrète prédéterminée, le procédé étant caractérisé en ce qu'il comprend la mise en œuvre par des moyens de traitement de données d'un équipement d'étapes de :

(a) détermination d'un état interne initial par application à un condensat du document obtenu par une fonction de hachage donnée d'une première implémentation blanchie de :

- la génération d'un nonce principal à partir dudit condensat ; puis
- une somme modulaire du nonce principal et d'une constante prédéterminée ;

ladite première implémentation blanchie étant stockée sur des moyens de stockage de données de l'équipement ;
(b) détermination d'un premier état interne par application à l'état interne initial d'une première opération d'arithmétique modulaire, puis d'un produit modulaire avec une exponentiation de la constante prédéterminée ;
(c) Détermination d'un deuxième état interne par application audit condensat d'une deuxième implémentation blanchie de :

- la génération du nonce principal à partir dudit condensat ; et
- une deuxième opération modulaire fonction du premier état interne, du nonce principal et de la clé secrète ;

ladite deuxième implémentation blanchie étant stockée sur les moyens de stockage de données de l'équipement ;
(d) génération d'une signature électronique du document à partir du premier état interne et du deuxième état interne déterminés.

Selon d'autres caractéristiques avantageuses et non limitatives :

- ladite deuxième opération d'arithmétique modulaire comprend l'inversion modulaire du nonce principal ;
- ladite deuxième opération d'arithmétique modulaire est $z \mapsto (z + s_1 x)k^{-1} \bmod q$, où $s_1^i$ est le premier état interne, $k$ le nonce principal, $x$ la clé secrète et $q$ une constante ;
- ledit produit modulaire avec une exponentiation de la constante prédéterminée est $z \mapsto zg^{-K} \bmod q$ ;
- ladite première opération d'arithmétique modulaire est $z \mapsto (g^z \bmod p) \bmod q$, où $g$ et $p$ sont des constantes ;
- ladite somme modulaire avec la constante prédéterminée est $z \mapsto k + K \bmod p$ ;
- la signature est le couple des premier et deuxième états internes ;
- la première opération d'arithmétique modulaire est mise en œuvre en clair par les moyens de traitement de données de l'équipement ;
- ledit produit modulaire avec une exponentiation de la constante prédéterminée est mise en œuvre par application d'une troisième implémentation blanchie stockée sur les moyens de stockage de données de l'équipement ;
- le procédé comprend en outre des étapes de :

(a') détermination d'un troisième état interne par application à un condensat du document obtenu par une fonction de hachage donnée d'une quatrième implémentation blanchie de :

- la génération du nonce principal et d'un nonce auxiliaire à partir dudit condensat ; puis
- le produit modulaire du nonce principal et du nonce auxiliaire ;

ladite quatrième implémentation blanchie étant stockée sur les moyens de stockage de données de l'équipement ;
(b') détermination d'un quatrième état interne par inversion modulaire du troisième état interne ;

- les étapes (a') et (b') sont mises en œuvre antérieurement à l'étape (c), ladite deuxième implémentation blanchie implémentant également :

- la génération du nonce auxiliaire à partir dudit condensat ; et
- le produit modulaire du quatrième état interne et du nonce auxiliaire de sorte à obtenir la valeur de l'inverse modulaire du nonce principal ;

- l'étape (b') est mise en œuvre en clair par les moyens de traitement de données de l'équipement ;
- ladite deuxième implémentation blanchie implémente également le produit modulaire du nonce auxiliaire et de ladite valeur de l'inverse modulaire du nonce principal pour vérification.
- Le procédé comprend une étape préalable (a0) de génération desdites implémentations blanchies par des moyens de traitement de données d'un serveur, et leur transmission à l'équipement.
- l'étape (a0) comprend la génération préalable des constantes *p*, *q*, *g* conformément à l'algorithme DSA ;

- l'étape (a0) comprend également la génération préalable de la clé secrète et d'une clé publique associée en fonction des constantes *p*, *q*, *g* ;
- lesdites implémentations blanchies utilisent un Système de Représentation Modulaire, RNS, pour effectuer ladite opération d'arithmétique modulaire ;
- le procédé comprend une étape subséquente (d) d'association par les moyens de traitement de données de l'équipement de la signature électronique générée au document de sorte à former le document signé.

Selon un deuxième et un troisième aspect, l'invention propose un produit programme d'ordinateur comprenant des instructions de code pour l'exécution d'un procédé selon le premier aspect de signature électronique d'un document avec une clé secrète prédéterminée ; et un moyen de stockage lisible par un équipement informatique sur lequel un produit programme d'ordinateur comprend des instructions de code pour l'exécution d'un procédé selon le premier aspect de signature électronique d'un document avec une clé secrète prédéterminée.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

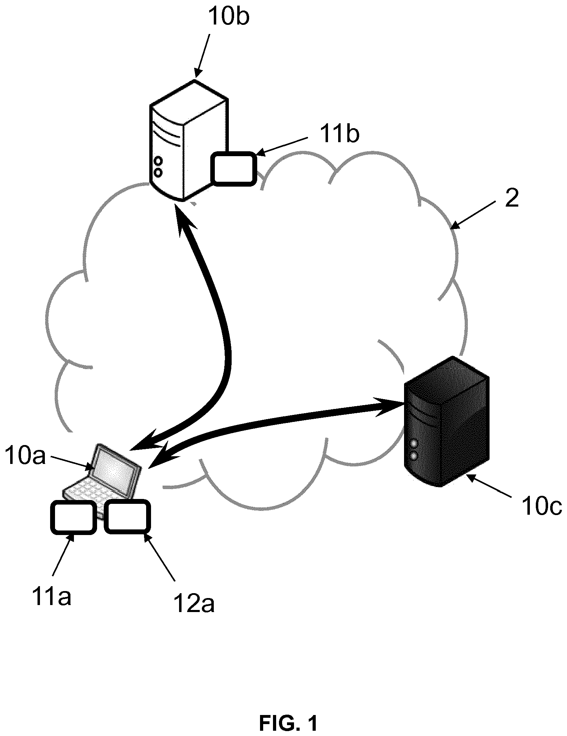

- la figure 1 est un schéma d'une architecture pour la mise en œuvre du procédé selon l'invention.

DESCRIPTION DETAILLEE

*Architecture*

En référence à la **figure 1,** est proposé un procédé de signature « boite blanche » d'un document mis en œuvre au sein d'un équipement 10a tel qu'un terminal mobile (smartphone, tablette tactile, etc.), i.e. un équipement ne disposant pas particulièrement d'un matériel sécurisé et qui peut faire l'objet d'attaques sur implémentation matérielle, et pour lequel l'approche boite blanche prend tout son intérêt.

L'équipement 10a comprend des moyens de traitement de données 11a (un processeur) et des moyens de stockage de données 12a (une mémoire, par exemple flash).

L'équipement 10a est par exemple relié à un serveur 10b par exemple via le réseau internet 20. Il peut être amené à recevoir depuis ce serveur 10b (par exemple celui d'un fournisseur de solutions de sécurité) des objets cryptographiques (qu'on décrira plus loin) contenant des secrets qui vont être stockées dans la mémoire 12a et utilisées pour la mise en œuvre du présent procédé.

L'équipement 10a peut lui-même être connecté à d'autres serveurs 10c de tiers auxquels il pourra transmettre le document signé une fois qu'il aura généré la signature électronique.

*Procédé de signature*

Le présent procédé est bien un procédé de « génération de signature électronique de document », et non de « génération d'un document signé ». Cela signifie qu'il permet seulement d'obtenir la signature électronique du document et pas encore le « document signé », i.e. l'association du document original et de la signature, généralement dans un conteneur quelconque.

Par « signature électronique » d'un document, on entend la définition classique de ce terme, à savoir une primitive cryptographique permettant d'identifier le signataire et garantissant que le document n'a pas été altéré depuis l'instant où la signature a été produite et est bien le document original (dans la suite de la présente description, on désignera comme « original » le document dont est réellement issu le condensat). Cet objet cryptographique consiste généralement en un chiffré du condensat du document grâce à une fonction de chiffrement asymétrique : le signataire utilise une clé privée, et tout le monde peut vérifier la signature grâce à une clé publique (en comparant le condensat contenu dans la signature et un condensat recalculé).

On comprendra que le présent procédé est une nouvelle implémentation d'algorithmes connus utilisant des opérations d'arithmétique modulaire (i.e. des opérations comprenant des calculs de modulo, notamment des exponentiations modulaires), en particulier DSA qui est un standard actuel et dont on prendra l'exemple dans la suite de la description. Plus précisément, il ne propose pas une nouvelle stratégie de signature, mais seulement une nouvelle façon de manipuler les données au sein de l'algorithme qui soit résistante à toutes les attaques matérielles en « boite blanche ».

Le document est associé à un condensat obtenu par une fonction de hachage donnée.

Comme expliqué, une fonction de hachage prend en entrée un message de taille arbitraire (le document original) et produit un condensat de taille fixe associé à ce message. Ici, ladite fonction de hachage donnée est avantageusement une fonction dite cryptographique, c'est-à-dire avec des propriétés supplémentaires : le condensat est statistiquement bien réparti dans l'ensemble des valeurs d'arrivées, il est impossible en temps raisonnable de trouver deux messages qui ont le même condensat (résistance aux collisions) et on ne peut pas à partir du condensat retrouver un message qui a permis d'obtenir cette valeur (résistance au calcul de pré-image).

On prendra l'exemple des fonctions de la famille SHA (« Secure Hash Algorithm »), standardisées par le NIST (« National Institute of Standards and Technology »), en particulier les sous-familles SHA-1 ou SHA-2 (notamment SHA-256).

*Principe*

Dans la demande FR1751894, il a été proposé, pour une même paire de clés publique/privée, de faire précalculer plusieurs valeurs d'un premier état interne $s_1^i$ chacune pour un nonce $k_i$, puis une implémentation blanchie $WB_i$ d'une opération d'arithmétique modulaire utilisée par l'algorithme de signature pour chacun des nonces $k_i$, ladite opération d'arithmétique modulaire étant en effet fonction du premier état interne $s_1^i$, du nonce $k_i$ et de la clé secrète x. On rappelle que par implémentation blanchie, ou « white box implementation », d'une opération, on entend une représentation de l'opération qui ne permette pas de remonter aux états internes ou aux paramètres lorsque l'opération est exécutée (par application de l'implémentation blanchie aux données d'entrée).

Ainsi, un ensemble de couples $\left\{\left(s_1^i, WB_i\right)\right\}_{i \in [\![0, n-1]\!]}$ du premier état interne $s_1^i$ et de l'implémentation blanchie $WB_i$ de l'opération d'arithmétique modulaire sont prédéfinis et stockés sur les stocké sur les moyens de stockage de données 12a de l'équipement 10a.

En d'autres termes, à clés publique/privée fixée, chaque couple ( $s_1^i$, $WB_i$) est entièrement déterminé par le nonce $k_i$ : tirer un nonce équivaut à tirer un couple. Le nonce $k_i$ n'est donc pas une donnée d'entrée de l'implémentation blanchie $WB_i$ mais bien un paramètre « encapsulé » auquel un attaquant ne peut pas remonter.

Cette solution apporte entière satisfaction car les propriétés attendues du blanchiment d'application font que l'observation de l'exécution de l'implémentation blanchie $WB_i$ ne permet pas de retrouver les valeurs de la clef secrète x et du nonce $k_i$ enfouies dans le calcul.

Cependant, la sécurité contre les restart attacks n'est complète que si l'on s'assure que les $k_i$ sont bien à usage unique. Pour cela il faut prévoir de :

- n'autoriser l'utilisation de chaque $WB_i$ qu'une seule fois pour empêcher de remonter à $k_i$ ;
- supprimer des moyens de stockage de données 12a les implémentations blanchies $WB_i$ après utilisation.

Or cela pourrait s'avérer malgré tout contournable si un attaquant avait non seulement accès à chaque état interne, mais également au contenu de la mémoire. Un attaquant pourrait alors extraire un des $WB_i$ et

le réinjecter plusieurs fois dans la mémoire de sorte à ce qu'il soit en plusieurs exemplaires, ce qui permettrait indirectement sa réutilisation et alors une possibilité de remonter à $k_i$.

Le présent procédé permet d'offrir tous les avantages de ce premier procédé (protection boite blanche complète) tout en éliminant toute possibilité d'attaque mémoire.

Pour cela il propose d'utiliser non pas une pluralité de nonces $k_i$ précalculés, mais au contraire une fonction de calcul à la volée d'un nonce $k$ (qui sera dit « nonce principal » dans la suite de la description) à partir du condensat du message, et d'utiliser pour une même paire de clés publique/privée, une première implémentation blanchie $WB_0$ de :

- la génération du nonce principal $k$ à partir dudit condensat ; puis
- une somme modulaire (i.e. une somme sur le résultat de laquelle un modulo est appliqué) du nonce principal $k$ et d'une constante prédéterminée $K$ (enfouie dans l'implémentation blanchie).

En effet il ne faut pas que le nonce principal $k$ apparaisse en clair, c'est pourquoi il faut le combiner avec la constante prédéterminée $K$ de sorte à obtenir un état interne « initial » $s_0$.

Comme l'on va montrer, il apparait alors possible de calculer efficacement le premier état interne $s_1$ à partir de cet état interne initial $s_0$ par une première opération d'arithmétique modulaire utilisée par l'algorithme de signature, suivie d'un produit modulaire (i.e. un produit sur le résultat duquel un modulo est appliqué) avec une exponentiation de la constante prédéterminée $K$ (ce qui permettra comme l'on montrera de supprimer la contribution de la constante prédéterminée $K$ et d'obtenir la valeur que l'on aurait eu en appliquant directement ladite opération d'arithmétique modulaire utilisé par l'algorithme de signature au nonce principal $k$ « tel quel », sans que celui ait eu besoin d'être révélé).

Comme l'on verra, une implémentation tout ou moins partiellement blanchie (la troisième implémentation blanchie notée $WB_{s1}$) de ce calcul est souhaitable (on verra divers modes de réalisation) a minima pour conserver secrète la constante prédéterminée $K$ (enfouie).

Ensuite, on peut calculer le deuxième état interne $s_2$ à partir du premier état interne $s_1$ en utilisant sur le condensat une opération d'arithmétique modulaire utilisée par l'algorithme de signature, fonction du premier état interne $s_1$, du nonce principal $k$ et de la clé secrète x.

Ici, on peut éviter de communiquer le nonce principal $k$ en le recalculant indépendamment à partir du condensat.

Pour cela est appliqué audit condensat une deuxième implémentation blanchie $WB_{s2}$ de :

- la génération (à nouveau) du nonce principal $k$ à partir dudit condensat (par la même fonction bien entendu) ; et

- la deuxième opération d'arithmétique modulaire ;

On rappelle que par implémentation blanchie, ou « white box implementation », d'une opération/ensemble d'opérations, on entend une représentation de l'opération/ensemble d'opérations qui ne permette pas de remonter aux états internes ou aux paramètres lorsqu'elle est exécutée (par application de l'implémentation blanchie aux données d'entrée). Les paramètres internes sont dits enfouis.

Ainsi, les implémentations blanchies $WB_0$, $WB_{s1}$, $WB_{s2}$ (ainsi que potentiellement une autre comme l'on verra) sont prédéfinies et stockées sur les moyens de stockage de données 12a de l'équipement 10a.

En d'autres termes, à clés publique/privée fixée, on n'a plus des couples ( $s_1^i$, $WB_i$) entièrement déterminés par des nonces $k_i$ (le nonce $k_i$ n'est pas une donnée d'entrée de l'implémentation blanchie $WB_i$ mais un paramètre enfoui), mais une combinaison d'une implémentation blanchie $WB_0$ dédiée à générer et cacher un nonce principal $k$ associé de façon unique à un message (il est ainsi impossible d'avoir deux messages conduisant au même nonce principal $k$) et d'une ou plusieurs implémentations blanchies des fonctions de calcul des états internes $s_1$ et $s_2$ cachant l'opération d'arithmétique modulaire, modifiées de sorte à tenir compte du fait que le nonce est caché.

De façon préférée, lesdites implémentations blanchies $WB_0$, $WB_{s1}$, $WB_{s2}$ (et autres) sont générées par les moyens de traitement de données 11b du serveur 1b et sont transmises pour stockage à l'équipement 10a dans une étape préalable (a0).

Les propriétés attendues du blanchiment d'application font que l'observation de l'exécution des implémentations blanchies $WB_0$, $WB_{s1}$, $WB_{s2}$ ne doivent pas permettre de retrouver les valeurs de la clef secrète $x$, du nonce $k$, et de la constante $K$ enfouies dans le calcul.

*Mode de réalisation préféré*

Dans l'exemple où l'algorithme de signature est conforme à DSA, alors $s_1$ peut être égal à ($g^k$ $mod$ $p$) $mod$ $q$, où $g$, $p$ et $q$ sont des constantes (en particulier des nombres premiers pour $p$ et $q$).

Cela signifie que ladite première opération d'arithmétique modulaire est avantageusement $z \mapsto (g^z$ $mod$ $p$) $mod$ $q$, où $g$ et $p$ sont des constantes.

Similairement, ladite deuxième opération d'arithmétique modulaire représentée par la deuxième implémentation blanchie $WB_{s2}$ peut comprendre l'inversion modulaire du nonce principal $k$ (i.e. utiliser $k^{-1}$ calculé à partir de $k$), et notamment être $z \mapsto (z + s_1 x)k^{-1}$ $mod$ $q$. On peut facilement vérifier que ce calcul correspond à celui du $s_2$ associé à $s_1$, pour une valeur de condensat z du message.

A ce titre, ladite somme modulaire avec la constante prédéterminée $K$ est avantageusement $z \mapsto k + K$ $mod$ $p$, et ledit produit modulaire avec une exponentiation de la constante prédéterminée $K$ qui suit la première opération d'arithmétique modulaire est avantageusement $z \mapsto z \cdot g^{-K}$ $mod$ $q$.

De façon générale, on pourra retenir que dans un contexte DSA les « sommes (ou additions) modulaire » sont des sommes de termes modulo $p$, et les « produits (ou multiplications) modulaire » sont des produits de termes modulo $q$.

En appliquant toutes les formules proposées ci-dessus, on a pour un condensat $z = H(m)$ :

-

$$s_0 = k(H(m)) + K \ mod \ p \ ;$$

- En appliquant la première opération on obtient donc l'état interne $s_{temp} = (g^{k(H(m))+K}$ $mod$ $p$) $mod$ $q = g^K$ $g^{k(H(m))}$ $mod$ $p$ $mod$ $q$;
- D'où $s_1 = s_{temp} \cdot g^{-K}$ $mod$ $q = g^{k(H(m))}$ $mod$ $p$ $mod$ $q$ ;
- Et enfin $s_2 = (H(m) + s_1 x)k(H(m))^{-1}$ $mod$ $q$.

Les valeurs $p$, $q$, $g$ sont préférentiellement prédéterminés conformément à l'algorithme DSA, en particulier par les moyens de traitement de données 11b du serveur 10b lors de l'étape préalable (a0).

On rappelle que dans DSA, $(p, q, g, y)$ forme une clé publique générée avec une clef privée x de la façon suivante :

- Choisir un nombre premier $p$ de longueur $L$ telle que $512 \le L \le 1024$, et $L$ est divisible par 64
- Choisir un nombre premier $q$ de 160 bits, de telle façon que $p$ - 1 = $qc$, avec $c$ un entier
- Choisir $h$, avec 1 < $h$ < $p$ - 1 de manière que $g = h^c$ $mod$ $p > 1$
- Générer aléatoirement un x, avec 0 < $x$ < $q$
- Calculer $y = g^x$ $mod$ $p$

L'homme du métier comprendra toutefois que le présent procédé n'est pas limité à DSA et apporte satisfaction pour tout algorithme de signature comportant une opération d'arithmétique modulaire fonction d'un premier état interne, d'un nonce et d'une clé secrète.

En ce qui concerne la fonction $z \mapsto k$ qui permet la génération du nonce principal $k$, elle utilise avantageusement un secret $sk$ qui lui est associé de manière uniquement, et utilise préférentiellement un algorithme de chiffrement, en particulier Triple DES. Cette fonction (et le secret) sont partagés entre toutes les implémentations blanchies ayant besoin de retrouver le nonce $k$.

Comme l'on verra, un éventuel nonce auxiliaire $k'$ peut être obtenu exactement de la même façon, en utilisant un secret différent $sk'$.

*Mise en œuvre*

Le présent procédé est mis en œuvre par les moyens de traitement de données 11a de l'équipement 10a et commence par une étape (a) de détermination de l'état interne initial $s_0$ par application à un condensat $H(m)$ du document $m$ (obtenu par une fonction de hachage donnée, telle que SHA256) de l'implémentation blanchie $WB_0$ stockée sur les moyens de stockage de données 12a de l'équipement 10a de :

- la génération du nonce principal $k$ à partir dudit condensat $H(m)$ ; puis
- une somme modulaire du nonce principal $k$ et de la constante prédéterminée $K$ ;

La première implémentation blanchie $WB_0$ a pour seule entrée le condensat $H(m)$ et pour sortie $s_0$ le résultat de la somme modulaire.

Dans une étape (b) est déterminé le premier état interne $s_1$ par application à l'état interne initial $s_0$ de la première opération d'arithmétique modulaire, puis du produit modulaire avec une exponentiation ($g^{-K}$) de la constante prédéterminée $K$.

Comme expliqué, cette étape (b) peut faire l'objet de plusieurs modes de réalisation.

Dans un premier mode, l'ensemble du calcul (application à l'état interne initial $s_0$ de la première opération d'arithmétique modulaire, puis du produit modulaire avec une exponentiation de la constante prédéterminée $K$) fait l'objet d'une troisième implémentation blanchie $WB_{s1}$. Toutefois, dans la mesure où la première opération d'arithmétique modulaire est typiquement une exponentiation doublement modulaire (modulo $p$ puis $q$), la mise en œuvre est longue est complexe.

Ainsi, alternativement on peut se permettre le passage comme expliqué avant par un état interne intermédiaire $s_{temp}$ (tel que $s_{temp}$ est déterminé par application à l'état interne initial $s_0$ de la seule première opération d'arithmétique modulaire, et $s_1$ est déterminé par application à l'état interne intermédiaire $s_{temp}$ du seul produit modulaire avec l'exponentiation de la constante prédéterminée $K$), dans la mesure où cet état interne n'apporte aucune information sensible puisque le nonce $k$ est caché par $K$.

De façon préférée, l'optionnelle troisième implémentation blanchie $WB_{s1}$ n'implémente que le produit modulaire avec l'exponentiation de la constante prédéterminée $K$. En d'autres termes la première opération d'arithmétique modulaire est mise en œuvre en clair (i.e. de façon non sécurisée) par les moyens de traitement de données 11a de l'équipement 10a puisque c'est la moins sensible et celle qui est la plus complexe.

La troisième implémentation blanchie $WB_{s1}$ a alors pour seule entrée l'état interne intermédiaire $s_{temp}$ et pour sortie $s_1$ le résultat du produit modulaire. Elle est très légère, car l'exponentiation de la constante prédéterminée $K$ (et le cas échant son modulo) peut-être précalculée et directement enfouie.

Ensuite, dans une troisième étape (c) est déterminé le deuxième état interne $s_2$ par application audit condensat $H(m)$ de la deuxième implémentation blanchie $WB_{s2}$ stockée sur les moyens de stockage de données 12a de l'équipement de :

- la « re-génération » du nonce principal $k$ à partir dudit condensat (on comprend qu'on met en œuvre la même fonction que dans la première implémentation blanchie $WB_0$, en d'autres termes qu'elle enfouit le même secret $sk$) ; et
- la deuxième opération modulaire fonction du premier état interne $s_1$, du nonce principal $k$ et de la clé secrète $x$ (enfouie) ;

La deuxième implémentation blanchie $WB_{s2}$ a pour entrées le condensat $H(m)$ et le premier état interne $s_1$ (et comme l'on verra plus loin éventuellement un quatrième état interne $s_4$), et pour sortie $s_2$ le résultat de la deuxième opération d'arithmétique modulaire.

A partir de là, dans une quatrième étape (c) peut être générée la signature électronique du document à partir du premier état interne $s_1$ du couple tiré et du deuxième état interne $s_2$ déterminé à l'étape (b). Dans l'exemple préféré de DSA, la signature est simplement $(s_1, s_2)$.

Additionnellement, le procédé peut comprendre une étape subséquente (d) d'association par les moyens de traitement de données 11a de l'équipement 10a de la signature électronique au document de sorte à former le document signé. L'équipement 10a peut alors se prévaloir juridiquement de cette signature électronique auprès d'autres entités (serveurs 10c).

De façon préférée, lorsqu'on délègue ainsi à l'équipement 10a la mise en œuvre de la première application d'arithmétique modulaire, il est intéressant de pouvoir prouver que l'état interne intermédiaire $s_{temp}$ n'a pas été altéré, en d'autres termes que la valeur du nonce principal $k$ sur la base de laquelle $s_{temp}$ a été calculée est bien celle d'origine.

En effet on note que si l'on demande deux fois la signature du même message, alors le même nonce $k$ sera généré dans les deux cas. Un attaquant contrôlant la mise en œuvre en clair de la première opération d'arithmétique pourrait redemander la signature du même message, puis « tricher » sur la valeur de $s_{temp}$ renvoyée la 2e fois (calculer ($g^{k(H(m))+K} + \delta \bmod p$) $\bmod q$, où $\delta$ est une erreur ajoutée sciemment, équivalent à modifier $k$).

Cela pourrait permettre de leurrer la deuxième implémentation blanchie $WB_{s2}$ qui va à son tour renvoyer une valeur fausse de $s_2$. Connaissant la vraie valeur de $s_2$ obtenue lors de la première signature et la valeur de $\delta$, il serait possible dans certains cas de remonter à $k$.

Ainsi, ladite troisième implémentation blanchie $WB_{s1}$ implémente avantageusement également la vérification que la valeur reçue de $s_{temp}$ est cohérente connaissant les valeurs de $k$ et $K$. Plus précisément, il est bien plus léger en termes de puissance de calcul de vérifier le résultat de l'exponentiation modulaire de $k + K$ que de réaliser ce calcul, c'est pourquoi la vérification peut être implémentée de façon blanchie.

On peut mentionner les techniques connues de l'homme du métier de délégation de calcul à un tiers, qui incluent diverses vérification de ce calcul (par exemple décrites dans l'article suivant : https://eprint.iacr.org/2015/206).

Par ailleurs, peut être utilisée la technique des « petits moduli » qui a une faible probabilité de faux positif mais est très légère. L'idée est que la troisième implémentation blanchie $WB_{s1}$ peut elle-même réaliser le calcul délégué mais sur la base de petits moduli (ce qui est bien plus facile que le calcul original), et vérifier, en réduisant la valeur reçue de $s_{temp}$ par ces petits moduli, que l'entité tierce (l'équipement 10a) a effectué le calcul attendu.

Pour cela, la troisième implémentation blanchie $WB_{s1}$ doit également implémenter la « re-génération » du nonce principal $k$ (car elle en a besoin pour effectuer cette vérification) à partir dudit condensat (on comprend qu'on met en œuvre la même fonction que dans la première implémentation blanchie $WB_0$ ou la deuxième implémentation blanchie $WB_{s2}$, en d'autres termes qu'elle enfouit le même secret $sk$).

En complément ou alternativement, un compteur est implémenté pour limiter ou empêcher la réutilisation d'au moins la première implémentation blanchie $WB_0$ avec un même jeu de paramètres.

Ainsi, le compteur prend de façon préférée la forme d'une liste de messages pour lesquels la signature a déjà été demandée, i.e. ayant un condensat déjà utilisé comme donnée d'entrée de la première implémentation blanchie $WB_0$ (cette liste est typiquement une liste de condensats), avantageusement lisible uniquement par cette première implémentation blanchie $WB_0$ (par exemple en étant chiffrée) de sorte à prévenir sa manipulation frauduleuse. Plus précisément, à chaque mise en œuvre du procédé, la première implémentation blanchie $WB_0$ accède à la liste, vérifie si le condensat reçu fait partie de la liste. Si oui le procédé est interrompu, et si non le condensat reçu est ajouté à la liste et le procédé est poursuivi.

A noter que dans le cas où la deuxième implémentation blanchie $WB_{s2}$ implémente déjà la vérification de $s_{temp}$, il est possible d'avoir une tolérance et d'autoriser par exemple une ou deux « re-signatures » du même message. En effet, la probabilité que la vérification même aux petits modulos donne un faux positif est très faible, il faudrait mettre en œuvre un très grand nombre de fois la signature du même message pour espérer réaliser un tel faux positif. Chaque condensat est pour cela associé dans ladite liste à un entier désignant le nombre d'utilisation restantes (ou inversement déjà consommées) de la première implémentation blanchie $WB_0$. Alors, à chaque mise en œuvre du procédé, la première implémentation blanchie $WB_0$ accède à la liste, vérifie si le condensat reçu fait partie de la liste et compare l'entier associé à un seuil (zéro si l'on compte le nombre d'utilisations restante, ou un nombre prédéterminé d'utilisations maximum si l'on compte les utilisations déjà consommées). Si le condensat fait partie de la liste et que le seuil est atteint le procédé est interrompu. Sinon le procédé est poursuivi et :

- soit le condensat reçu ne fait pas partie de liste et il y est ajouté avec une valeur initiale donnée à l'entier associé (ledit nombre prédéterminé d'utilisations maximum si l'on compte le nombre d'utilisations restantes, ou zéro si l'on compte les utilisations déjà consommées),
- soit le condensat reçu fait partie de la liste et le seuil n'est pas atteint, on décrémente (respectivement incrémente) l'entier associé au condensat.

A noter qu'est possible un mode de réalisation combinant la vérification de $s_{temp}$, et interdisant toute « re-signature » du même message. Il apporte une sécurité inégalée puisque même avec de la chance on ne peut alors pas tromper la deuxième implémentation blanchie $WB_{s2}$.

*Nonce auxiliaire*

Comme expliqué, la deuxième opération d'arithmétique modulaire utilise dans le mode de réalisation préféré la valeur inverse du nonce principal $k$. Or, dans la mesure où $k$ n'est pas précalculé, la valeur de $k^{-1}$ soit être calculée en direct, et l'application de l'implémentation blanchie $WB_{s2}$ pour exécuter une telle inversion modulaire peut être longue l'implémentation blanchie.

Le présent procédé propose de faire calculer astucieusement cette inversion en clair sans pour autant dévoiler la valeur de $k$, en utilisant un deuxième nonce $k'$ dit nonce auxiliaire, généré dans les mêmes conditions.

Pour cela le procédé comprend avantageusement des étapes supplémentaires (a') et (b'), qui sont préférentiellement mises en œuvre avant l'étape (c), mais sont indépendantes des étapes (a) et (b).

Dans l'étape (a') est déterminé un troisième état interne $s_3$ par application à un condensat du document obtenu par une fonction de hachage donnée d'une quatrième implémentation blanchie $WB_0'$ stockée sur les moyens de stockage de données 12a de l'équipement 10a, de :

- la génération du nonce principal $k$ et du nonce auxiliaire $k'$ à partir dudit condensat $H(m)$ ; puis
- le produit modulaire du nonce principal $k$ et du nonce auxiliaire $k'$.

Dans l'exemple où l'algorithme de signature est conforme à DSA, alors ledit produit modulaire est avan-

tageusement $z_1, z_2 \mapsto z_1 \cdot z_2 \bmod q$ (c'est le même produit qu'à l'étape (b)), de sorte que $s_3 = k(H(m)) \cdot k'(H(m)) \bmod q$.

Dans l'étape (b') est détermination un quatrième état interne $s_4$ par inversion modulaire du troisième état interne $s_3$. En d'autres termes $s_4 = s_3^{-1} \bmod q = {}^1/_{k(H(m))} \cdot k'(H(m)) \bmod q$.

A l'instar de l'étape (b), cette étape (b') est préférentiellement mise en œuvre en clair (i.e. de façon non sécurisée) par les moyens de traitement de données 11a de l'équipement 10a puisqu'une opération d'arithmétique modulaire est comme expliqué une opération peu sensible (car $k$ est caché) et très complexe.

A ce stade-là, connaissant $k'$ on peut facilement récupérer $k^{-1}$. A ce titre, ladite deuxième implémentation blanchie $WB_{s2}$ implémente avantageusement également :

- la génération du nonce auxiliaire $k'$ à partir dudit condensat ; et
- le produit modulaire du quatrième état interne $s_4$ et du nonce auxiliaire $k'$ de sorte à obtenir la valeur de l'inverse modulaire du nonce principal $k$.

Ledit produit modulaire est avantageusement toujours de la même forme, de sorte que si l'on note $s_5$ le résultat de ce produit on a $s_5 = s_4 \cdot k'(H(m)) \bmod q = {}^1/_{k(H(m))} \bmod q$.

On a ainsi une implémentation blanchie très légère du calcul de la l'inverse modulaire de $k$.

Il est à noter que l'utilisation du nonce auxiliaire a un autre intérêt. Dans la mesure où des traitements en clair peuvent effectuées, il est intéressant de pouvoir prouver que l'état interne intermédiaire $s_4$ n'a pas été altéré, en d'autres termes que la valeur du nonce principal $k$ sur la base de laquelle $s_4$ a été calculée est bien celle d'origine, de la même façon que pour $s_{temp}$.

Ainsi, ladite deuxième implémentation blanchie $WB_{s2}$ implémente avantageusement également le produit modulaire du nonce auxiliaire $k$ et de ladite valeur de l'inverse modulaire du nonce principal $k$ pour vérification (que $s_5$ est bien l'inverse de $k$ dans $\mathbb{Z}/q\mathbb{Z}$).

Plus précisément, si la ladite valeur de l'inverse modulaire du nonce principal $k$ est bien ce qu'elle prétend être, en d'autres termes que $s_5 \equiv k^{-1} \bmod q$, alors $k \cdot s_5 \bmod q = k \cdot k^{-1} \bmod q = 1 \bmod q$.

*Implémentation blanchie*

La réalisation d'implémentations blanchies d'opérations d'arithmétique modulaire est connue de l'homme du métier.

Toutefois, l'application de l'implémentation blanchie pour exécuter l'opération représentée peut être longue, en particulier si ladite opération d'arithmétique modulaire comprend des exponentiations modulaires.

A ce titre, de façon préférée lesdites implémentations blanchies $WB_i$ utilisent un Système de Représentation Modulaire (« Residue Number System », RNS) pour effectuer ladite opération d'arithmétique modulaire.

Plus précisément, le principe d'implémentation RNS permet de décomposer des calculs modulo une valeur donnée en des calculs modulo des petits nombres premiers dont le produit est plus grand que ladite valeur donnée (grâce au théorème chinois).

L'homme du métier pourra procéder par exemple conformément à la demande US2016/239267.

Alternativement il est possible de laisser faire la partie finale du calcul en clair, en utilisant le principe du brevet US5479511. Par exemple, dans le cas de $s_2$, l'implémentation blanchie peut facilement calculer $s_2' = (H(m) + s_1 x)(k^{-1} \bmod q) + r \cdot q$, avec r un nombre quelconque de longueur égale à $q$, et les moyens de traitement de données 11a de l'équipement 10a calculent $s_2 = s_2' \bmod q$.

*Produit programme d'ordinateur*

Selon un deuxième et un troisième aspects, l'invention concerne un produit programme d'ordinateur comprenant des instructions de code pour l'exécution (en particulier sur les moyens de traitement de données 11a de l'équipement 10a) d'un procédé selon le premier aspect de l'invention de signature électronique d'un document avec une clé secrète $x$ prédéterminée, ainsi que des moyens de stockage lisibles par un équipement informatique (une mémoire 12a de l'équipement 10a) sur lequel on trouve ce produit programme d'ordinateur.

**Revendications**

1. Procédé de signature électronique d'un document avec une clé secrète (x) prédéterminée, le procédé étant **caractérisé en ce qu'**il comprend la mise en œuvre par des moyens de traitement de données (11a) d'un équipement (10a) d'étapes de :

(a) détermination d'un état interne initial ($s_0$) par application à un condensat du document obtenu par une fonction de hachage donnée d'une première implémentation blanchie ($WB_0$) de :

- la génération d'un nonce principal ($k$) à partir dudit condensat ; puis
- une somme modulaire du nonce principal ($k$) et d'une constante prédéterminée ($K$) ;

ladite première implémentation blanchie ($WB_0$) étant stockée sur des moyens de stockage de données (12a) de l'équipement (10a) ;

(b) détermination d'un premier état interne ($s_1$) par application à l'état interne initial ($s_0$) d'une première opération d'arithmétique modulaire, puis d'un produit modulaire avec une exponentiation de la constante prédéterminée ($K$) ;

(c) Détermination d'un deuxième état interne ($s_2$) par application audit condensat d'une deuxième implémentation blanchie ($WB_{s2}$) de :

- la génération du nonce principal ($k$) à partir dudit condensat ; et
- une deuxième opération modulaire fonction du premier état interne ($s_1$), du nonce principal ($k$) et de la clé secrète ($x$) ;

ladite deuxième implémentation blanchie ($WB_{s2}$) étant stockée sur les moyens de stockage de données (12a) de l'équipement (10a) ;

(d) génération d'une signature électronique du document à partir du premier état interne ($s_1$) et du deuxième état interne ($s_2$) déterminés.

2. Procédé selon la revendication 1, dans lequel ladite deuxième opération d'arithmétique modulaire comprend l'inversion modulaire du nonce principal ($k$).

3. Procédé selon la revendication 2, dans lequel ladite deuxième opération d'arithmétique modulaire est $z \mapsto (z + s_1 x)k^{-1} \bmod q$, où $s_1^i$ est le premier état interne, $k$ le nonce principal, $x$ la clé secrète et $q$ une constante.

4. Procédé selon la revendication 3, dans lequel ledit produit modulaire avec une exponentiation de la constante prédéterminée ($K$) est $z \mapsto zg^{-K} \bmod q$.

5. Procédé selon l'une des revendications 3 et 4, dans lequel ladite première opération d'arithmétique modulaire est $z \mapsto (g^z \bmod p) \bmod q$, où $g$ et $p$ sont des constantes.

6. Procédé selon la revendication 5, dans lequel ladite somme modulaire avec la constante prédéterminée ($K$) est $z \mapsto k + K \bmod p$.

7. Procédé selon l'une des revendications 1 à 6, dans lequel la première opération d'arithmétique modulaire est mise en œuvre en clair par les moyens de traitement de données (11a) de l'équipement (10a), et ledit produit modulaire avec une exponentiation de la constante prédéterminée ($K$) est mise en œuvre par application d'une troisième implémentation blanchie ($WB_{s1}$) stockée sur les moyens de stockage de données (12a) de l'équipement (10a).

8. Procédé selon l'une des revendications 1 à 7, comprenant en outre des étapes de :

(a') détermination d'un troisième état interne ($s_3$) par application à un condensat du document obtenu par une fonction de hachage donnée d'une quatrième implémentation blanchie ($WB_0'$) de :

- la génération du nonce principal ($k$) et d'un nonce auxiliaire ($k'$) à partir dudit condensat ; puis
- le produit modulaire du nonce principal ($k$) et du nonce auxiliaire ($k'$) ;

ladite quatrième implémentation blanchie ($WB_0'$) étant stockée sur les moyens de stockage de données (12a) de l'équipement (10a) ;

(b') détermination d'un quatrième état interne ($s_4$) par inversion modulaire du troisième état interne ($s_3$).

9. Procédé selon la revendication 2 en combinaison avec la revendication 8, dans lequel les étapes (a') et (b') sont mises en œuvre antérieurement à l'étape (c), ladite deuxième implémentation blanchie ($WB_{s2}$) implémentant également :

- la génération du nonce auxiliaire ($k'$) à partir dudit condensat ; et
- le produit modulaire du quatrième état interne ($s_4$) et du nonce auxiliaire ($k'$) de sorte à obtenir la valeur de l'inverse modulaire du nonce principal ($k$).

10. Procédé selon la revendication 9, dans lequel l'étape (b') est mise en œuvre en clair par les moyens de traitement de données (11a) de l'équipement (10a).

11. Procédé selon l'une des revendications 9 et 10, dans lequel ladite deuxième implémentation blanchie ($WB_{s2}$) implémente également le produit modulaire du nonce auxiliaire ($k$) et de ladite valeur de l'inverse modulaire du nonce principal ($k$) pour vérification.

12. Procédé selon l'une des revendications 1 à 11, comprenant une étape préalable (a0) de génération desdites implémentations blanchies ($WB_0$, $WB_0'$, $WB_{s1}$, $WB_{s2}$) par des moyens de traitement de données (11b) d'un serveur (1b), et leur transmission à l'équipement (10a).

13. Procédé selon l'une des revendications 1 à 12, dans lequel lesdites implémentations blanchies ($WB_0$, $WB_0'$, $WB_{s1}$, $WB_{s2}$) utilisent un Système de Représentation Modulaire, RNS, pour effectuer les sommes ou produits modulaires.

14. Produit programme d'ordinateur comprenant des instructions de code pour l'exécution d'un procédé selon l'une des revendications 1 à 13 de signature électronique d'un document avec une clé secrète ($x$) prédéterminée, lorsque ledit programme est exécuté par un ordinateur.

15. Moyen de stockage lisible par un équipement informatique sur lequel un produit programme d'ordinateur comprend des instructions de code pour l'exécution d'un procédé selon l'une des revendications 1 à 13 de signature électronique d'un document avec une clé secrète ($x$) prédéterminée.

**Patentansprüche**

1. Verfahren zum elektronischen Signieren eines Dokuments mit einem vorbestimmten geheimen Schlüssel ($x$), wobei das Verfahren **dadurch gekennzeichnet ist, dass** es das Umsetzen, durch Datenverarbeitungsmittel (11a) einer Ausrüstung (10a), von Schritten umfasst des:

   (a) Bestimmens eines ursprünglichen internen Zustands ($s_0$) durch Anwenden, auf einen Hashwert des Dokuments, der über eine gegebene Hashfunktion erhalten wird, einer ersten weißen Implementierung ($WB_0$):

   - der Erzeugung einer Haupt-Nonce ($k$) auf Grundlage des Hashwerts; und anschließend
   - einer modularen Summe der Haupt-Nonce ($k$) und einer vorbestimmten Konstante ($K$);

   wobei die erste weiße Implementierung ($WB_0$) auf Datenspeichermitteln (12a) der Ausrüstung (10a) gespeichert ist;
   (b) Bestimmens eines ersten internen Zustands ($s_1$) durch Anwenden, auf den ursprünglichen internen Zustand ($s_0$), einer ersten modularen Arithmetik-Operation, und anschließend eines modularen Produkts mit einer Exponentiation der vorbestimmten Konstante ($K$);
   (c) Bestimmens eines zweiten internen Zustands ($s_2$) durch Anwenden, auf den Hashwert, einer zweiten weißen Implementierung ($WB_{s2}$):

   - der Erzeugung der Haupt-Nonce ($k$) auf Grundlage des Hashwerts; und
   - einer zweiten modularen Operation, die vom ersten internen Zustand ($s_1$), von der Haupt-Nonce ($k$) und von dem geheimen Schlüssel ($x$) abhängig ist;

   wobei die zweite weiße Implementierung ($WB_{s2}$) auf den Datenspeichermitteln (12a) der Ausrüstung (10a) gespeichert ist;
   (d) Erzeugens einer elektronischen Signatur des Dokuments auf Grundlage des ersten internen Zustands ($s_1$) und des zweiten internen Zustands ($s_2$), die bestimmt wurden.

2. Verfahren nach Anspruch 1, wobei die zweite modulare Arithmetik-Operation die modulare Inversion der Haupt-Nonce ($k$) umfasst.

3. Verfahren nach Anspruch 2, wobei die zweite modulare Arithmetik-Operation $z \mapsto (z + s_1 x)k^{-1} \bmod q$ ist, wobei $s_1^i$ der erste interne Zustand, $k$ die Haupt-Nonce, $x$ der geheime Schlüssel und $q$ eine Konstante ist.

4. Verfahren nach Anspruch 3, wobei das modulare Produkt mit einer Exponentiation der vorbestimmten Konstante ($K$) $z \mapsto z g^{-K} \bmod q$ ist.

5. Verfahren nach einem der Ansprüche 3 und 4, wobei die erste modulare Arithmetik-Operation $z \mapsto (g^z \bmod p) \bmod q$ ist, wobei $g$ und $p$ Konstanten sind.

6. Verfahren nach Anspruch 5, wobei die modulare Summe mit der vorbestimmten Konstante ($K$) $z \mapsto k + K \bmod p$ ist.

7. Verfahren nach einem der Ansprüche 1 bis 6, wobei die erste modulare Arithmetik-Operation von den Datenverarbeitungsmitteln (11a) der Ausrüstung (10a) in Klartext umgesetzt wird, und das modulare Produkt mit einer Exponentiation der vorbestimmten Konstante ($K$) durch Anwendung einer dritten weißen Implementierung ($WB_{s1}$), die auf den Datenspeichermitteln (12a) der Ausrüstung (10a) gespeichert ist, umgesetzt wird.

8. Verfahren nach einem der Ansprüche 1 bis 7, das weiter Schritte umfasst des:

   (a') Bestimmens eines dritten internen Zustands ($s_3$) durch Anwenden, auf einen Hashwert des Dokuments, der über eine gegebene Hashfunktion erhalten wird, einer vierten weißen Implementierung ($WB_0'$):

   - der Erzeugung der Haupt-Nonce ($k$) und einer Hilfs-Nonce ($k'$) auf Grundlage des Hashwerts; und anschließend
   - des modularen Produkts der Haupt-Nonce ($k$) und der Hilfs-Nonce ($k'$);

   wobei die vierte weiße Implementierung ($WB_0'$) auf den Datenspeichermitteln (12a) der Ausrüstung (10a) gespeichert ist;
   (b') Bestimmens eines vierten internen Zustands ($s_4$) durch modulare Inversion des dritten internen Zustands ($s_3$).

9. Verfahren nach Anspruch 2 in Kombination mit Anspruch 8, wobei die Schritte (a') und (b') vor dem Schritt (c) umgesetzt werden, wobei die zweite weiße Implementierung ($WB_{s2}$) ebenfalls implementiert:

- die Erzeugung der Hilfs-Nonce ($k'$) auf Grundlage des Hashwerts; und
- das modulare Produkt des vierten internen Zustands ($s_4$) und der Hilfs-Nonce ($k'$), um den Wert der modularen Inversen der Haupt-Nonce ($k$) zu erhalten.

**10.** Verfahren nach Anspruch 9, wobei der Schritt (b') von den Datenverarbeitungsmitteln (11a) der Ausrüstung (10a) in Klartext umgesetzt wird.

**11.** Verfahren nach einem der Ansprüche 9 und 10, wobei die zweite weiße Implementierung ($WB_{s2}$) zur Verifizierung ebenfalls das modulare Produkt der Hilfs-Nonce ($k$) und des Werts der modularen Inversen der Haupt-Nonce ($k$) implementiert.

**12.** Verfahren nach einem der Ansprüche 1 bis 11, das einen vorhergehenden Schritt (a0) des Erzeugens der weißen Implementierungen ($WB_0$, $WB_0'$, $WB_{s1}$, $WB_{s2}$) durch Datenverarbeitungsmittel (11b) eines Servers (1b), und ihre Übertragung an die Ausrüstung (10a) umfasst.

**13.** Verfahren nach einem der Ansprüche 1 bis 12, wobei die weißen Implementierungen ($WB_0$, $WB_0'$, $WB_{s1}$, $WB_{s2}$) ein Residue Number System, RNS, verwenden, um die modularen Summen oder Produkte durchzuführen.

**14.** Computerprogrammprodukt, das Codeanweisungen umfasst für das Ausführen eines Verfahrens nach einem der Ansprüche 1 bis 13 zum elektronischen Signieren eines Dokuments mit einem vorbestimmten geheimen Schlüssel ($x$), wenn das Programm von einem Computer ausgeführt wird.

**15.** Von einer Informatikausrüstung lesbares Speichermittel, auf dem ein Computerprogrammprodukt Codeanweisungen umfasst für das Ausführen eines Verfahrens nach einem der Ansprüche 1 bis 13 zum elektronischen Signieren eines Dokuments mit einem vorbestimmten geheimen Schlüssel ($x$).

**Claims**

**1.** A method for digital signing of a document using a predetermined secret key (x), the method being **characterised in that** it comprises the implementation by a data-processing unit (11a) of equipment (10a) steps of:

(a) determination of an initial internal state ($s_0$) by application to a hash value of the document obtained by a given hashing function, of a first white box implementation ($WB_0$) of:

- generation of a main nonce ($k$) from said hash value; then
- a modular sum of the main nonce ($k$) and of a predetermined constant ($K$);

said first white box implementation ($WB_0$) being stored on a data-storage unit (12a) of the equipment (10a);

(b) determination of a first internal state ($s_1$) by application to the initial internal state ($s_0$) of a first modular arithmetic operation, then of a modular product with an exponentiation of the predetermined constant ($K$);

(c) determination of a second internal state ($s_2$) by application to said hash value of a second white box implementation ($WB_{s2}$) of:

- generation of the main nonce ($k$) from said hash value; and
- a second modular operation function of the first internal state ($s_1$), of the main nonce ($k$) and of the secret key ($x$);

said second white box implementation ($WB_{s2}$) being stored on the data-storage unit (12a) of the equipment (10a);

(d) generation of a digital signature of the document from the determined first internal state ($s_1$) and of the second internal state ($s_2$).

**2.** The method according to Claim 1, wherein said second modular arithmetic operation comprises a modular inversion of the main nonce ($k$).

**3.** The method according to Claim 2, wherein said second modular arithmetic operation is $z \mapsto (z + s_1 x)k^{-1} \bmod q$, where $s_1^i$ is the first internal state, $k$ the main nonce, $x$ the secret key and $q$ a constant.

**4.** The method according to Claim 3, wherein said modular product with an exponentiation of the predetermined constant ($K$) is $z \mapsto zg^{-K} \bmod q$.

**5.** The method according to one of Claims 3 and 4, wherein said first modular arithmetic operation is $z \mapsto (g^z \bmod p) \bmod q$, where $g$ and $p$ are constants.

**6.** The method according to Claim 5, wherein said modular sum with the predetermined constant ($K$) is $z \mapsto k + K \bmod p$.

**7.** The method according to one of Claims 1 to 6, wherein the first modular arithmetic operation is visibly executed by the data-processing unit (11a) of the equipment (10a), and said modular product with exponentiation of the predetermined constant ($K$) is executed by application of a third white box implemen-

tation ($WB_{s1}$) stored on the data-storage unit (12a) of the equipment (10a).

8. The method according to one of Claims 1 to 7, comprising also steps of:

   (a') determination of a third internal state ($s_3$) by application to a hash value of the document obtained by a given hashing function of a fourth white box implementation ($WB_0$') of:

   - generation of the main nonce ($k$) and of an auxiliary nonce ($k'$) from said hash value; then
   - the modular product of the main nonce ($k$) and of the auxiliary nonce ($k'$);

   said fourth white box implementation ($WB_0$') being stored on the data-storage unit (12a) of the equipment (10a);
   (b') determination of a fourth internal state ($s_4$) by modular inversion of the third internal state ($s_3$).

9. The method according to Claim 2 in combination with Claim 8, wherein steps (a') and (b') are conducted prior to step (c), said second white box implementation ($WB_{s2}$) implementing also:

   - generation of the auxiliary nonce ($k'$) from said hash value; and
   - the modular product of the fourth internal state ($s_4$) and of the auxiliary nonce ($k'$) so as to obtain the value of the modular inverse of the main nonce ($k$).

10. The method according to Claim 9, wherein step (b') is visibly executed by the data-processing unit (11a) of the equipment (10a).

11. The method according to one of Claims 9 and 10, wherein said second white box implementation ($WB_{s2}$) implements also the modular product of the auxiliary nonce ($k$) and of said value of the modular inverse of the main nonce ($k$) for verification.

12. The method according to one of Claims 1 to 11, comprising a prior step (a0) of generation of said white box implementations ($WB_0$, $WB_0$', $WB_{s1}$, $WB_{s2}$) by a data-processing unit (11b) of a server (1b), and their transmission to the equipment (10a).

13. The method according to one of Claims 1 to 12, wherein said white box implementations ($WB_0$, $WB_0$', $WB_{s1}$, $WB_{s2}$) utilise a Residue Number System, RNS, to execute the modular sums or products.

14. Computer program product comprising code instructions for execution of a method as claimed in one of Claims 1 to 13 for digital signing of a document using a predetermined secret key ($x$), when said program is executed by a computer.

15. Computer-readable storage medium on which a computer program product comprises code instructions for execution of a method as claimed in one of Claims 1 to 13 for digital signing of a document using a predetermined secret key ($x$).

**FIG. 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016328543 A
- US 20130024699 A1, Muir
- US 20090094464 A1, Futa
- WO 2016155565 A1, Ding
- FR 1751894
- US 2016239267 A
- US 5479511 A